# EUROPEAN PATENT APPLICATION

(11) **EP 4 366 025 A1**
(43) Date of publication of application: **08.05.2024**
(21) Application number: 21948756.8
(22) Date of filing: 06.07.2021
(51) Int. Cl.: H01M 10/058, H01M 4/13

(54) **ELECTROCHEMICAL DEVICE AND ELECTRONIC DEVICE**

(71) Applicant: Ningde Amperex Technology Limited, Ningde, Fujian 352100 (CN)
(72) Inventor: LIU, Zuchao, Ningde, Fujian 352100 (CN)
(74) Representative: Icosa
(86) International application number: PCT/CN2021/104741
(87) International publication number: WO 2023/279257

(57) **Abstract**

An electrochemical apparatus (1) and an electronic apparatus are disclosed. The electrochemical apparatus (1) includes an electrode plate (10) and a tab (20), where the electrode plate (10) includes a current collector (11), a first active material layer (12), and a first insulation layer (13). The current collector (11) includes a first region (Z1), a second region (Z2), and a first portion of a third region (Z3), where the first region (Z1) is provided with the first active material layer (12), and the second region (Z2) is provided with the first insulation layer (13). Along a thickness direction of the current collector (11), an orthographic projection of the second region (Z2) at least partially surrounds an orthographic projection of the first portion of the third region (Z3). In this way, the electrode plate (10) has a small exposed conductive region. This can reduce the safety risk such as a short circuit risk caused during a needle penetration operation on the electrochemical apparatus (1).

## Description

### TECHNICAL FIELD

This application relates to the field of battery technologies, and specifically, to an electrochemical apparatus and an electronic apparatus.

### BACKGROUND

With the extensive application of 4G and the advent of the 5G era, lithium-ion batteries have been widely used in mobile phones, smart bracelets, AR, VR, and other fields. Application scenarios become increasingly complicated, and involve more frequent interactions with human. New scenarios have increasingly high requirements for the safety performance of battery cells, especially mechanical safety performance such as needle penetration and heavy impact.

A lithium-ion battery includes a current collector and a tab electrically connected to the current collector. Only as an example, the tab may be welded to the current collector. During manufacturing of lithium-ion batteries, a large portion of aluminum foil is exposed on the current collector for reserving a tab welding position, which causes safety vulnerability. A solution is required for solving such problem.

### SUMMARY

In view of the prior art, some embodiments of this application provide an electrochemical apparatus and an electronic apparatus, so as to alleviate the problem of high safety risks caused by a large exposed conductive region of an electrode plate.

According to a first aspect, an embodiment of this application provides an electrochemical apparatus including an electrode plate and a tab, where the electrode plate includes a current collector, a first active material layer, and a first insulation layer. The current collector includes a first surface and a second surface arranged opposite each other. The first surface of the current collector includes a first region, a second region, and a first portion of a third region, where the first region is provided with the first active material layer, and the second region is provided with the first insulation layer, an orthographic projection of the second region along a thickness direction of the current collector at least partially surrounds an orthographic projection of the first portion of the third region along the thickness direction of the current collector, and the first portion of the third region, without the first insulation layer, is an exposed conductive region of the tab. This embodiment of this application has the following technical effects: the current collector has a small exposed region (including the first portion of the third region), so that the exposed conductive region of the electrode plate is small. This can reduce the safety risk such as a short circuit risk caused during a needle penetration operation on the electrochemical apparatus.

In some embodiments of this application, the tab is provided on the current collector, and the orthographic projection of the first portion of the third region along the thickness direction of the current collector partially surrounds an orthographic projection of the tab along the thickness direction of the current collector. The current collector includes a first end portion, a second end portion, a third end portion, and a fourth end portion. The first end portion and the second end portion are arranged along a first direction, where the first direction is a width direction of the current collector, the first end portion includes a first side edge of the current collector, and the second end portion includes a second side edge of the current collector. The third end portion and the fourth end portion are arranged along a second direction, where the second direction is a length direction of the current collector, the third end portion includes a third side edge of the current collector, and the fourth end portion includes a fourth side edge of the current collector. Along the first direction, the first portion of the third region is provided in the first end portion, and along the second direction, the first portion of the third region is provided in the third end portion. The tab includes a first side edge of the tab, a second side edge of the tab, a third side edge of the tab, and a fourth side edge of the tab. The first side edge of the tab and the second side edge of the tab are arranged opposite each other along the first direction, where along the first direction, a distance between the second side edge of the tab and the second side edge of the current collector is smaller than a distance between the first side edge of the tab and the second side edge of the current collector. The third side edge of the tab and the fourth side edge of the tab are arranged opposite each other along the second direction, where along the second direction, a distance between the third side edge of the tab and the third side edge of the current collector is smaller than a distance between the fourth side edge of the tab and the third side edge of the current collector. The first portion of the third region includes a first side edge of the first portion, a second side edge of the first portion, a third side edge of the first portion, and a fourth side edge of the first portion. The first side edge of the first portion and the second side edge of the first portion are arranged opposite each other along the first direction, where along the first direction, the second side edge of the first portion is adjacent to the second side edge of the tab. The third side edge of the first portion and the fourth side edge of the first portion are arranged opposite each other along the second direction, where along the second direction, the third side edge of the first portion is adjacent to the third side edge of the tab, and the fourth side edge of the first portion is adjacent to the fourth side edge of the tab. Some embodiments of this application have the following technical effects: a distance is present between side edges of the tab and side edges of the first portion of the third region. Controlling the distance, for example, reducing a distance between two adjacent side edges can further reduce the exposed conductive region of the electrode plate. In addition, when the tab is being connected to the first portion of the third region, the tab is prevented from coming into contact with the first insulation layer in the first portion of the third region. This helps improve the stability of the connection between the tab and the first portion of the third region.

In some embodiments of this application, along the first direction, a distance between the second side edge of the first portion and the second side edge of the tab is L2, a distance between the third side edge of the first portion and the third side edge of the tab is L3, and a distance between the fourth side edge of the first portion and the fourth side edge of the tab is L4, where at least one of the following conditions is satisfied: (a1) L2 ≤ 10 mm; (b1) L3 ≤ 10 mm; or (c1) L4 ≤ 10 mm. Some embodiments of this application have the following technical effects: the distance between the side edges of the tab and the side edges of the first portion of the third region is small, which can further reduce the exposed conductive region of the electrode plate.

In some embodiments of this application, the orthographic projection of the second region along the thickness direction of the current collector surrounds an orthographic projection of the third region along the thickness direction of the current collector. Some embodiments of this application have the following technical effects: only the first portion of the third region is exposed on the current collector, so that the exposed conductive region of the electrode plate is small. This can reduce the safety risk such as a short circuit risk caused during a needle penetration operation on the electrochemical apparatus.

In some embodiments of this application, a distance W1 between the first side edge of the first portion and the first side edge of the current collector satisfies 0<W1≤10 mm. Some embodiments of this application have the following technical effects: in a scenario of cutting an entire electrode plate blank into single electrode plates, an error is allowed in the cutting process, lowering the accuracy requirement for the cutting process.

In some embodiments of this application, along the second direction, a degree of difference between a length of the first side edge of the first portion and a length of the second side edge of the first portion is not greater than 5%. Some embodiments of this application have the following technical effects: the electrical connection between the tab and the electrode plate is more stable while the exposed conductive region of the electrode plate is small.

In some embodiments of this application, the orthographic projection of the second region along the thickness direction of the current collector and part of an orthographic projection of the first side edge of the current collector along the thickness direction of the current collector jointly surround the orthographic projection of the first portion of the third region along the thickness direction of the current collector. Some embodiments of this application have the following technical effects: when viewed along the thickness direction of the current collector, the first side edge of the first portion coincides with the first side edge of the current collector. Accurate cutting is achieved in cutting an electrode plate blank into single electrode plates, so that the exposed conductive region of the electrode plate meets the design.

In some embodiments of this application, a degree of difference between a length of the first side edge of the first portion and a length of the second side edge of the first portion is greater than 5%. Some embodiments of this application have the following technical effects: the electrical connection between the tab and the electrode plate is more stable while the exposed conductive region of the electrode plate is small.

In some embodiments of this application, the length of the first side edge of the first portion is less than the length of the second side edge of the first portion. Some embodiments of this application have the following technical effects: an overlap between the tab and the first insulation layer is reduced and the thickness of the electrochemical apparatus is reduced, helping increase the energy density of the electrochemical apparatus.

In some embodiments of this application, the third side edge of the first portion and the fourth side edge of the first portion each independently include an arc-shaped portion or an arc-like portion, where the arc-shaped portion or arc-like portion is provided in the first end portion. Some embodiments of this application have the following technical effects: the overlap between the tab and the first insulation layer is reduced in the third end portion of the current collector, and the thickness of the electrochemical apparatus is reduced, helping increase the energy density of the electrochemical apparatus.

In some embodiments of this application, along the first direction, an extending length of the arc-shaped portion or arc-like portion is not greater than 10 mm. Some embodiments of this application have the following technical effects: the extending length of the arc-shaped portion or arc-like portion is controlled to be small and the area of an arc-shaped notch is small, so that the arc-shaped notch does not affect the stability of the connection between the tab and the first portion of the third region.

In some embodiments of this application, the third region further includes a second portion, and along the first direction, the second portion of the third region is provided in the second end portion. Some embodiments of this application have the following technical effects: in a scenario of cutting an entire electrode plate blank into single electrode plates, an error is allowed in the cutting process, lowering the accuracy requirement for the cutting process.

In some embodiments of this application, along the thickness direction of the current collector, the orthographic projection of the second region and an orthographic projection of the second side edge of the current collector jointly surround an orthographic projection of the second portion of the third region. Some embodiments of this application have the following technical effects: a distance is present between the second portion of the third region and the first portion of the third region, and the first insulation layer is provided between these two portions. In this way, even if there is an error in the cutting process, the exposed conductive region of the electrode plate can still be small, thereby reducing the safety risk.

In some embodiments of this application, the second portion of the third region includes a first side edge of the second portion, a second side edge of the second portion, a third side edge, and a fourth side edge of the second portion. The first side edge of the second portion and the second side edge of the second portion are arranged opposite each other along the first direction, where along the first direction, the first side edge of the second portion is adjacent to the second side edge of the current collector, and the second side edge of the second portion coincides with the second side edge of the current collector. The third side edge of the second portion and the fourth side edge of the second portion are arranged opposite each other along the second direction. The second portion of the third region satisfies at least one of the following conditions: (a2) along the first direction, a distance W2 between the first side edge of the second portion and the second side edge of the current collector satisfies 0<W2≤10 mm; (b2) along the second direction, a degree of difference between a length of the first side edge of the second portion and a length of the second side edge of the first portion is not greater than 5%; (c2) the third side edge of the second portion and the third side edge of the first portion are on a straight line; or (d2) the fourth side edge of the second portion and the fourth side edge of the first portion are on a straight line. Some embodiments of this application have the following technical effects: the second portion of the third region has a small size, further reducing the exposed conductive region of the electrode plate.

In some embodiments of this application, the electrode plate includes a second active material layer and a second insulation layer, and the second surface of the current collector includes a fourth region, a fifth region, and a sixth region, where the fourth region is provided with the second active material layer, the fifth region is provided with the second insulation layer, and an orthographic projection of the fifth region along the thickness direction of the current collector at least partially surrounds an orthographic projection of the sixth region along the thickness direction of the current collector. Some embodiments of this application have the following technical effects: singe-side welding and double-side forming is implemented when welding is allowed in the sixth region, helping improve the stability of welding between the tab and the first portion of the third region.

In some embodiments of this application, the sixth region and the third region satisfy one of the following conditions: (a3) the orthographic projection of the sixth region along the thickness direction of the current collector falls within an orthographic projection of the third region along the thickness direction of the current collector; (b3) an orthographic projection of the third region along the thickness direction of the current collector falls within the orthographic projection of the sixth region along the thickness direction of the current collector; or (c3) the orthographic projection of the sixth region along the thickness direction of the current collector coincides with an orthographic projection of the third region along the thickness direction of the current collector. Some embodiments of this application have the following technical effects: the sixth region and the third region at least partially overlap along the thickness direction of the current collector, helping improve the stability of welding between the tab and the third region.

In some embodiments of this application, the third region includes an exposed blank region of the current collector. Some embodiments of this application have the following technical effects: the current collector is directly connected to the tab. This helps reduce the overlap between the tab and the third end portion of the current collector and reduce the thickness of the electrochemical apparatus, thereby increasing the energy density of the electrochemical apparatus.

In some embodiments of this application, the third region is provided with a plating layer, and the tab is connected to the current collector through the plating layer. Some embodiments of this application have the following technical effects: the plating layer facilitates a stable connection between the tab and the current collector, achieving good electrical contact between them.

In some embodiments of this application, a thermal conductivity of the plating layer is higher than a thermal conductivity of the current collector. Some embodiments of this application have the following technical effects: the heat generated by the current collector and the electrochemical apparatus can be conducted to the tab and then to the outside through the plating layer, facilitating the heat dissipation of the electrochemical apparatus.

In some embodiments of this application, the first insulation layer includes a first insulating material, and the first insulating material includes at least one of combinations of aluminum oxide, alumina hydroxide, silicon oxide, boehmite, titanium oxide, and zirconium oxide. Some embodiments of this application have the following technical effect: good electrical insulation performance.

In some embodiments of this application, the first active material layer includes an active material, and the active material includes at least one of combinations of a lithium transition metal composite oxide and a lithium-containing transition metal phosphate compound. Some embodiments of this application have the technical effect of allowing metal ions to be electrochemically absorbed and released.

According to a second aspect, an embodiment of this application provides an electronic apparatus including a load and the electrochemical apparatus according to any one of the foregoing embodiments, where the electrochemical apparatus supplies power to the electronic apparatus.

In the electrochemical apparatus and electronic apparatus of this application, along a thickness direction of a current collector, an orthographic projection of a second region of the current collector at least partially surrounds an orthographic projection of a first portion of a third region. In this case, along a width direction of the current collector of an electrode plate, an exposed conductive region of the electrode plate has a length less than that of the electrode plate, so that the exposed conductive region of the electrode plate is small. After the electrode plate is connected to a tab, a region of the electrode plate not covered by the tab is small. This can reduce the safety risk such as a short circuit risk caused during a needle penetration operation on the electrochemical apparatus.

### BRIEF DESCRIPTION OF DRAWINGS

FIG. 1 is a schematic structural diagram of an unfolded electrochemical apparatus according to an embodiment of this application;
FIG. 2 is a schematic structural diagram of an electrode plate blank according to a first embodiment of this application;
FIG. 3 is a schematic structural diagram of a single electrode plate obtained by cutting the electrode plate blank shown in FIG. 2;
FIG. 4 is a schematic structural diagram of a connection between a tab and the electrode plate shown in FIG. 3;
FIG. 5 is a schematic diagram of a cross section of a tab and an electrode plate connected along the A-A' direction shown in FIG. 1;
FIG. 6 is a schematic diagram of a cross section of a tab and an electrode plate connected along the B-B' direction shown in FIG. 1;
FIG. 7 is a schematic structural diagram of an electrode plate blank according to a second embodiment of this application;
FIG. 8 is a schematic structural diagram of a single electrode plate obtained by cutting the electrode plate blank shown in FIG. 7;
FIG. 9 is a schematic structural diagram of a connection between a tab and the electrode plate shown in FIG. 8;
FIG. 10 is a schematic structural diagram of a single electrode plate according to a third embodiment of this application;
FIG. 11 is a schematic structural diagram of a connection between a tab and the electrode plate shown in FIG. 10;
FIG. 12 is a schematic structural diagram of an electrode plate blank according to a fourth embodiment of this application;
FIG. 13 is a schematic structural diagram of a single electrode plate obtained by cutting the electrode plate blank shown in FIG. 12;
FIG. 14 is a schematic structural diagram of a connection between a tab and the electrode plate shown in FIG. 13;
FIG. 15 is a schematic structural diagram of a second surface of an electrode plate according to an embodiment of this application; and
FIG. 16 is a schematic structural diagram of a second surface of an electrode plate according to another embodiment of this application.

Reference signs are as follows.
Electrochemical apparatus 1;
Electrode plate 10; Electrode plate blank 10a; Dashed line O1; Dashed line 02; Dashed line 03;
   First active material layer 12; First insulation layer 13; Second active material layer 12a; Second insulation layer 13a;
   Current collector 11;
      First region Z1; Second region Z2; Third region Z3;
      Fourth region Z4; Fifth region Z5; Sixth region Z6;
   First portion Z31 of third region Z3;
      First side edge Z311 of first portion; Second side edge Z312 of first portion;
      Third side edge Z313 of first portion; Fourth side edge Z314 of first portion;
   Second portion Z32 of third region Z3;
      First side edge Z321 of second portion; Second side edge Z322 of second portion;
      Third side edge Z323 of second portion; Fourth side edge Z324 of second portion;
Tab 20;
   First side edge 21 of tab; Second side edge 22 of tab;
   Third side edge 23 of tab; Fourth side edge 24 of tab;
Packaging bag 30;
   Accommodating cavity 31; Main portion 30a; Packaging portion 30b; Tab glue 32;
First direction x; and Second direction y.

### DESCRIPTION OF EMBODIMENTS

An electrochemical apparatus provided by an embodiment of this application includes an electrode plate and a tab. The electrode plate of this application has the following settings. A current collector of the electrode plate includes a first region, a second region, and a first portion of a third region, where the first region is provided with a first active material layer, the second region is provided with a first insulation layer, an orthographic projection of the second region along a thickness direction of the current collector at least partially surrounds an orthographic projection of the first portion of the third region along the thickness direction of the current collector. In other words, along a width direction of the current collector, the first portion of the third region of the current collector has a length less than that of the electrode plate, so that an exposed conductive region of the current collector is small. This can reduce the safety risk such as a short circuit risk caused during a needle penetration operation on the electrochemical apparatus.

The electrochemical apparatus is an apparatus generating electric energy depending on chemical reactions. In specific scenarios, the electrochemical apparatus includes but is not limited to all types of primary batteries, secondary batteries, fuel batteries, solar batteries, and capacitor (for example, super capacitor) batteries. Preferably, the electrochemical apparatus may be a lithium secondary battery, including but not limited to a lithium metal secondary battery, a lithium-ion secondary battery, a lithium polymer secondary battery, and a lithium-ion polymer secondary battery. The electrochemical apparatus according to an embodiment of this application may be in the form of a single battery or a battery module.

To make the objectives, technical solutions, and advantages of this application clearer, the following clearly and completely describes the technical solutions of this application with reference to the embodiments and the accompanying drawings in the embodiments. Apparently, the described embodiments are merely some rather than all of the embodiments. Based on the embodiments of this application, the following embodiments and technical features thereof may be combined if there is no collision.

It should be understood that, in the descriptions of the embodiments of this application, directions or location relationships indicated by the terms such as "center", "longitudinal", "lateral", "length", "width", "thickness", "up", "down", "front", "rear", "left", "right", "vertical", "horizontal", "top", "bottom", "inside", "outside", "clockwise", and "counterclockwise" are based on the directions or the location relationships shown in the accompanying drawings, and are merely intended to describe the technical solutions in the corresponding embodiments of this application and simplify the descriptions, but not intended to indicate or imply that an apparatus or an element shall have a specific direction or be formed and operated in a specific direction, and therefore cannot be understood as a limitation on this application.

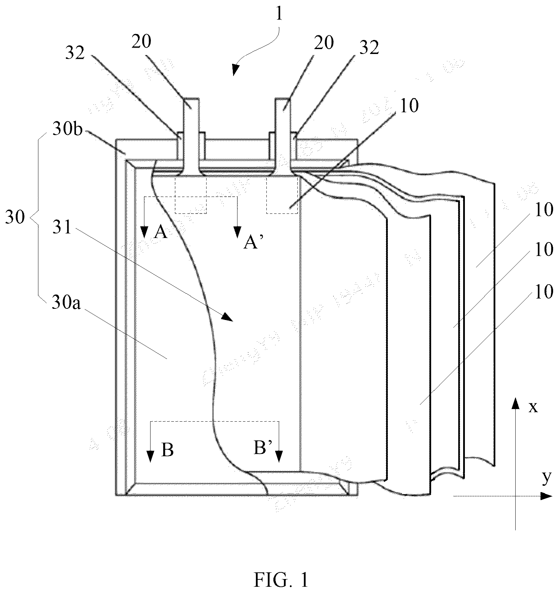

FIG. 1 is a schematic structural diagram of an unfolded electrochemical apparatus 1 according to an embodiment of this application. The electrochemical apparatus 1 includes an electrode assembly (not shown in the figure), a tab 20, and a packaging bag 30.

An accommodating cavity 31 is formed in the packaging bag 30. Internal components of the electrochemical apparatus 1 (such as the electrode assembly and electrolyte) are accommodated in the accommodating cavity 31, and the packaging bag 30 is used to protect these internal components, improving the protection and safety of the electrochemical apparatus 1.

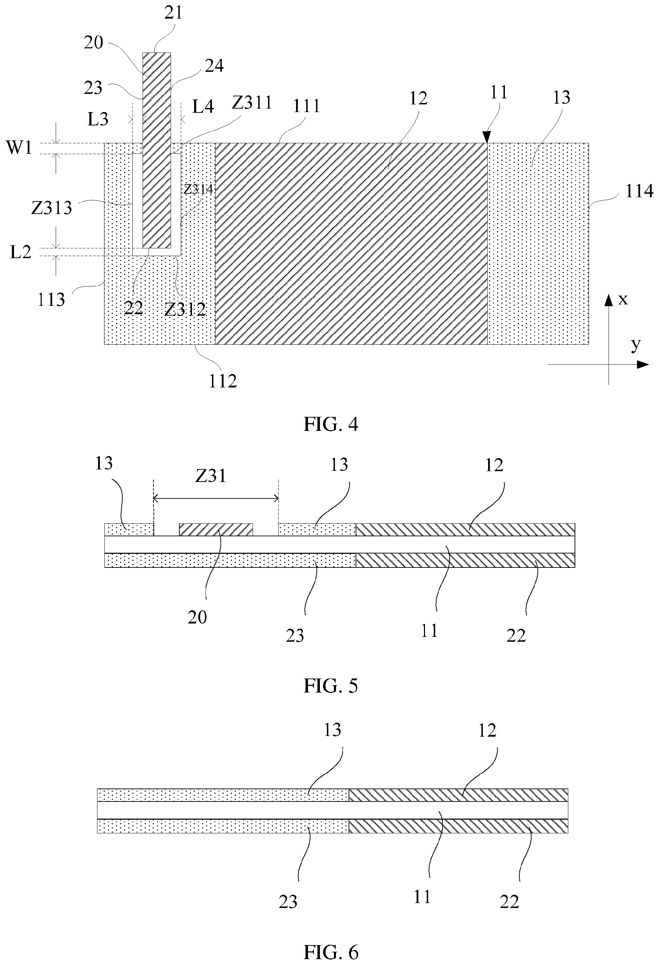

The packaging bag 30 includes a main portion 30a and a packaging portion 30b. The electrode assembly and electrolyte are provided in the accommodating cavity 31 formed by the main portion 30a, and the packaging portion 30b and the tab 20 extend out from one end of the main portion 30a. The packaging portion 30b is configured to seal the ends of the main portion 30a, so as to prevent electrolyte from leaking from an end portion and impurities outside the packaging bag 30 such as water and oxygen from entering the packaging bag 30. It should be understood that the packaging portion 30b also seals a protruding region of the tab 20. For example, a tab glue 32 is provided at a joint of the packaging bag 30 and the tab 20 to seal the joint of the packaging bag 30 and the tab 20. A packaging region of the tab 20, extending out of the packaging portion 30b may be referred to as a top sealing region. In the scenario illustrated in FIG. 5, the tab 20 extends from an upper end of the main portion 30a. In this case, the top sealing region is provided at the upper end of the main portion 30a.

The electrode assembly may be formed by winding a plurality of electrode plates 10. In a scenario in which the electrochemical apparatus 1 includes positive and negative polarities, the electrode assembly includes a positive electrode plate and a negative electrode plate, as well as a separator provided between the positive electrode plate and the negative electrode plate. One end of the tab 20 extends into the packaging bag 30 and is electrically connected to the electrode plate 10 with a corresponding polarity, and the other end of the tab 20 extends out from one side of the packaging bag 30.

The tab 20 includes a first tab and a second tab, where the first tab is a negative electrode tab and the second tab is a positive electrode tab. The first tab is electrically connected to the negative electrode plate and extends from inside the packaging bag 30 to outside the packaging bag 30, and the second tab is electrically connected to the positive electrode plate and extends from inside the packaging bag 30 to outside the packaging bag 30. In other embodiments, the first tab may be a positive electrode tab, and the second tab may be a negative electrode tab. In part of this application, a structure of the tab 20 of this application is described using one tab as an example. In addition, a structure of the electrode plate 10 of this application is described using the positive or negative electrode plate as an example.

### First embodiment

Referring to FIG. 1 to FIG. 6, the electrode plate 10 includes a current collector 11, and a first active material layer 12 and a first insulation layer 13 provided on a surface of the current collector 11. The current collector 11 includes a first surface and a second surface arranged opposite each other. The first surface is illustrated in the figure.

The first surface of the current collector 11 includes a first region Z1, a second region Z2, and a first portion Z31 of a third region Z3. The first region Z1 is provided with the first active material layer 12, the second region Z2 is provided with the first insulation layer 13, and an orthographic projection of the second region Z2 along a thickness direction of the current collector 11 surrounds an orthographic projection of the first portion Z31 of the third region Z3 along the thickness direction of the current collector 11. In other words, when viewed along the thickness direction of the current collector 11, the second region Z2 surrounds the first portion Z31 of the third region Z3. In some embodiments, an insulation layer (for example, at least one of the first insulation layer 13 or a second insulation layer 13a) may be applied on the current collector 11 by intaglio printing. A known intaglio printing technique may be used in this application, which is not limited herein.

The current collector 11 includes a first end portion, a second end portion, a third end portion, and a fourth end portion. The first end portion and the second end portion are arranged along a first direction x, where the first end portion includes a first side edge 111 of the current collector, and the second end portion includes a second side edge 112 of the current collector. The third end portion and the fourth end portion are arranged along a second direction y, where the second direction y is a length direction of the current collector 11, the third end portion includes a third side edge 113 of the current collector, and the fourth end portion includes a fourth side edge 114 of the current collector. Along the first direction x, the first portion Z31 of the third region Z3 is provided in the first end portion, and along the second direction y, the first portion Z31 of the third region Z3 is provided in the third end portion.

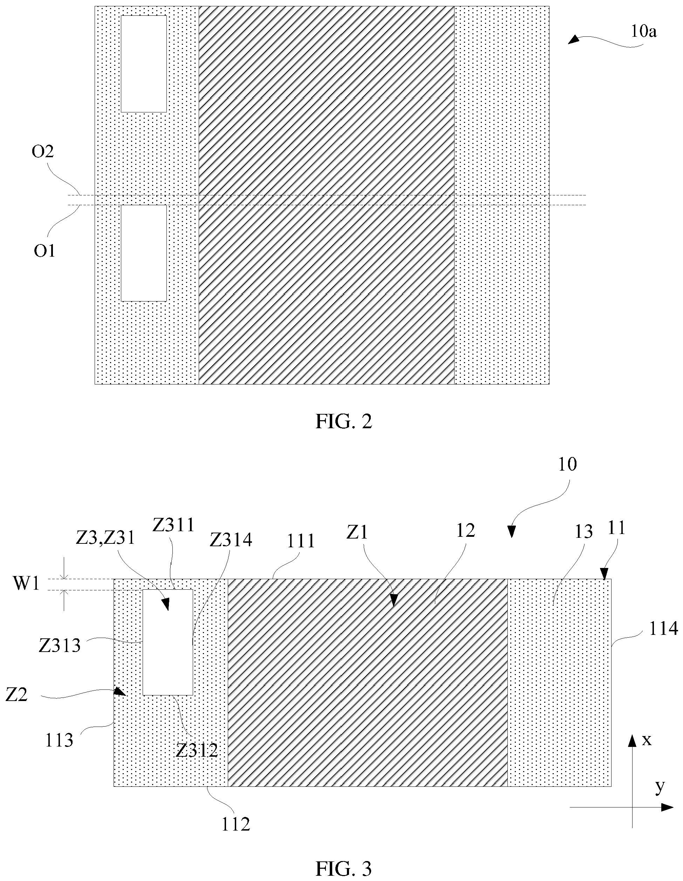

In this embodiment, the end portion may be understood as follows: taking a component as an example, an end portion is an edge part of the component having a side edge. Along a direction from that side edge to the center of the component, a percentage of the length of the edge part in the length of the component is smaller than a predetermined threshold. For example, the predetermined threshold is d, satisfying 10% ≤ d ≤ 30%. Refer to the scenario illustrated in FIG. 3. The first end portion of the current collector 11 is an upper edge portion of the current collector 11. Along the first direction x, a percentage of a length of the upper edge portion to a width of the current collector 11 (for example, a length of the current collector 11 along the first direction x) is smaller than a predetermined threshold. For example, the predetermined threshold d is 10%.

Referring to FIG. 4, the tab 20 is provided in the first portion Z31 of the third region Z3, and the orthographic projection of the first portion Z31 of the third region Z3 along the thickness direction of the current collector 11 surrounds an orthographic projection of the tab 20 along the thickness direction of the current collector 11. The tab 20 includes a first side edge 21 of the tab, a second side edge 22 of the tab, a third side edge 23 of the tab, and a fourth side edge 24 of the tab. The first side edge 21 of the tab and the second side edge 22 of the tab are arranged opposite each other along the first direction x, where along the first direction x, a distance between the second side edge 22 of the tab and the second side edge 112 of the current collector is smaller than a distance between the first side edge 21 of the tab and the second side edge 112 of the current collector. In other words, the second side edge 22 of the tab is closer to the second side edge 112 of the current collector. The third side edge 23 of the tab and the fourth side edge 24 of the tab are arranged opposite each other along the second direction y, where along the second direction y, a distance between the third side edge 23 of the tab and the third side edge 113 of the current collector is smaller than a distance between the fourth side edge 24 of the tab and the third side edge 113 of the current collector. In other words, the third side edge 23 of the tab is closer to the third side edge 113 of the current collector.

The first portion Z31 of the third region Z3 includes a first side edge Z311 of the first portion, a second side edge Z312 of the first portion, a third side edge Z313 of the first portion, and a fourth side edge Z314 of the first portion. The first side edge Z311 of the first portion and the second side edge Z312 of the first portion are arranged opposite each other along the first direction x, where along the first direction x, the second side edge Z312 of the first portion is adjacent to the second side edge 22 of the tab and a distance therebetween is L2. The third side edge Z313 of the first portion and the fourth side edge Z314 of the first portion are arranged opposite each other along the second direction y, where along the second direction y, the third side edge Z313 of the first portion is adjacent to the third side edge 23 of the tab and a distance therebetween is L3, and the fourth side edge Z314 of the first portion is adjacent to the fourth side edge 24 of the tab, and a distance therebetween is L4.

In the scenario illustrated in FIG. 4, side edges of the first portion Z31 of the third region Z3 and side edges of the tab 20 each may be a straight line, and two adjacent side edges are parallel to each other. For example, the second side edge Z312 of the first portion is parallel to the second side edge 22 of the tab, the third side edge Z313 of the first portion is parallel to the fourth side edge Z314 of the first portion, and the fourth side edge Z314 of the first portion is parallel to the fourth side edge 24 of the tab. A distance between two adjacent side edges may be the length of a line segment perpendicular to and connected with the two side edges.

In a scenario, two adjacent side edges are not parallel, that is, in other embodiments of this application, the first portion Z31 of the third region Z3 and of the tab 20 may not be in a rectangular shape as shown in FIG. 4 to FIG. 16, but may be in a trapezoid shape or other irregular shapes. Side edges of the first portion Z31 of the third region Z3 and side edges of the tab 20 may include straight lines extending along the first direction x and/or the second direction y, or diagonal lines, even arcs, curves, or the like that do not extend along the first direction x and the second direction y. In view of this, the method for acquiring the distance between two adjacent side edges includes but is not limited to one of the following.
1. Minimum distance along a corresponding direction. For example, along the first direction x, a minimum distance between the second side edge Z312 of the first portion and the second side edge 22 of the tab is the distance L2 between these two side edges.
2. Average distance between these two adjacent side edges. Measurement of the distance L2 between the second side edge Z312 of the first portion and the second side edge 22 of the tab is still used as an example. Along the second direction y, the second side edge Z312 of the first portion and the second side edge 22 of the tab are respectively divided into a plurality of equally spaced segments. More segments mean a more accurate measurement result. Two sampling points a₁ and a₂ are set in each segment along the first direction x, and the two sampling points a₁ and a₂ are located on the second side edge Z312 of the first portion and the second side edge 22 of the tab respectively. The sampling points a₁ and a₂ are two points in the first direction x, and along the first direction x, the distance between two segments is the distance between two sampling points a₁ and a₂. Based on this, the distance between two sampling points a₁ and a₂ in each segment is measured, and an average value is calculated as the distance between two adjacent side edges.

A distance is present between side edges of the tab 20 and side edges of the first portion Z31 of the third region Z3. Controlling the distance, for example, reducing a distance between two adjacent side edges can further reduce the exposed conductive region of the electrode plate 10. In addition, when the tab 20 is being connected to the first portion Z31 of the third region Z3, the tab 20 is prevented from coming into contact with the first insulation layer 13 in the first portion Z31 of the third region Z3. This helps improve the stability of the connection between the tab 20 and the first portion Z31 of the third region Z3. In some embodiments, at least one of the following conditions is satisfied: L2 ≤ 10 mm; L3 ≤ 10 mm; or L4 ≤ 10 mm. The foregoing distance between two adjacent side edges helps improve the stability of the electrical connection between the tab 20 and electrode plate 10 while reducing the conductive region of the electrode plate 10 not covered by the tab 20. Optionally, a proportion of the tab 20 to the first portion Z31 of the third region Z3 may be 0.3 to 1. In this case, the exposed conductive region of the electrode plate 10 is small.

The electrode plate 10 may be obtained by cutting an entire electrode plate blank 10a. For example, referring to FIG. 2 and FIG. 4, two electrode plates 10 can be obtained theoretically by cutting the electrode plate blank 10a along a dashed line O1. It should be understood that during actual cutting, due to reasons such as a process error, cutting may be actually performed along a dashed line 02 instead of the dashed line O1, so that the electrode plate 10 shown in FIG. 3 and FIG. 4 is obtained.

Referring to FIG. 4, a distance W1 between the first side edge Z311 of the first portion and the first side edge 111 of the current collector satisfies 0<W1≤10 mm. W1 may be set based on a size, type, or the like of the electrochemical apparatus 1. For example, a value of W1 may be 8 mm, 5 mm, 3 mm, 2 mm, or the like. A cutting process error is allowed in this embodiment, helping reduce the accuracy requirement for the cutting process.

The first portion Z31 of the third region Z3 may be a regular rectangle or be of other shapes, which is not limited in this application. For example, an error in the preparation process or the like causes a length of the first side edge Z311 of the first portion to be unequal to a length of the second side edge Z312 of the first portion along the second direction y. In some embodiments, a degree of difference between the length of the first side edge Z311 of the first portion and the length of the second side edge Z312 of the first portion is within a specified threshold, for example, not greater than 5%. This helps improve the stability of the electrical connection between the tab 20 and the electrode plate 10 while reducing the conductive region of the electrode plate 10 not covered by the tab 20. The degree of difference may be understood as a percentage of the difference between the lengths of two side edges to the longer one of the first side edge Z311 of the first portion and the second side edge Z312 of the first portion. In the scenario illustrated in FIG. 2 to FIG. 4, the first side edge Z311 of the first portion is equal to the second side edge Z312 of the first portion in length, indicating that the degree of difference between the lengths of these two side edges is zero.

Referring to FIG. 1 to FIG. 6, the first insulation layer 13 is a film formed using an insulating material, and the first insulation layer 13 is provided in the second region Z2 to electrically insulate the second region Z2 from other conductive elements (for example, the tab 20 or electrolyte). Along the thickness direction of the current collector 11, an orthographic projection of the second region Z2 surrounds an orthographic projection of the first portion Z31 of the third region Z3. The first portion Z31 of the third region Z3 may be a conductive region where the electrode plate 10 is electrically connected to the tab 20. Along the first direction x, which is a width direction of the current collector 11, an exposed conductive region of the electrode plate 10 has a length less than that of the electrode plate 10, so that the exposed conductive region of the electrode plate 10 is small. After the electrode plate 10 is connected to the tab 20, a region of the electrode plate 10 not covered by the tab 20 is small. This can reduce the safety risk such as a short circuit risk caused during a needle penetration operation on the electrochemical apparatus 1.

Further optionally, a sealing piece (not shown in the figure) may be provided in the region where the tab 20 is electrically connected to the electrode plate 10. The sealing piece covers not only the region where the tab 20 and the electrode plate 10 are connected to avoid welding burrs in the region of connection from piercing the packaging bag 30, but also the entire first portion Z31 of the third region Z3. In an embodiment, the sealing piece includes but is not limited to an insulator such as adhesive paper or a sealant.

### Second embodiment

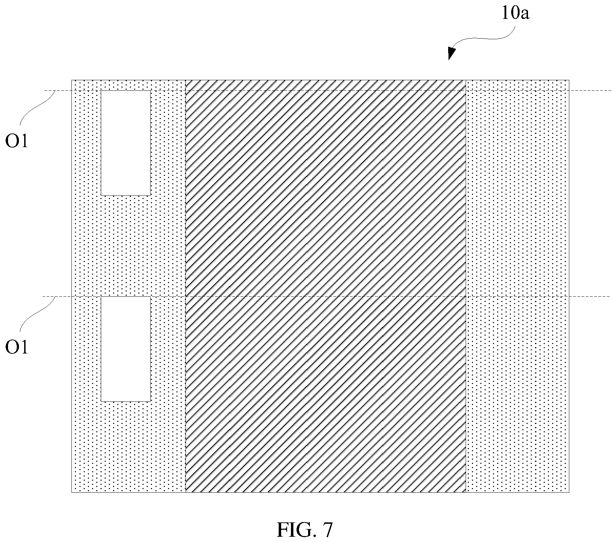

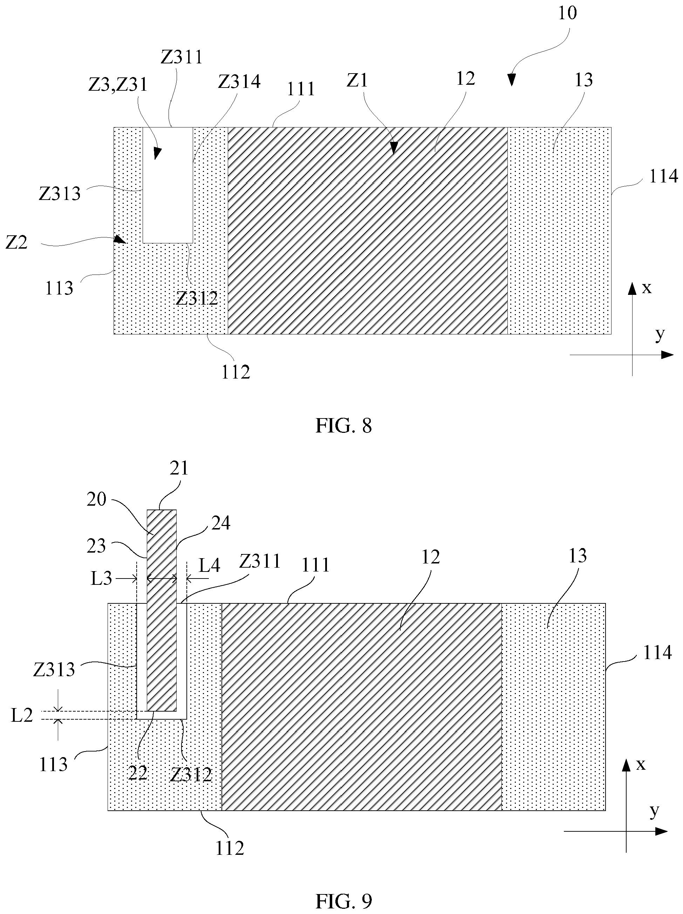

In this application, structural elements with a same name are identified by a same reference sign. This embodiment is based on but different from the foregoing embodiment. Referring to FIG. 7 to FIG. 9, in this embodiment, the orthographic projection of the second region Z2 along the thickness direction of a current collector 11 and part of an orthographic projection of the first side edge 111 of the current collector along the thickness direction of the current collector 11 jointly surround the orthographic projection of the first portion Z31 of the third region Z3 along the thickness direction of the current collector 11. In other words, observed in the thickness direction of the current collector 11, the first side edge Z311 of the first portion coincides with the first side edge 111 of the current collector, and W1 = 0. In contrast to FIG. 4, referring to FIG. 7 and FIG. 9, two electrode plates 10 of this embodiment can be obtained by cutting the electrode plate blank 10a along the dashed line O1. With accurate cutting, the exposed conductive region (the first portion Z31 of the third region Z3) of the electrode plate 10 complies with design.

### Third embodiment

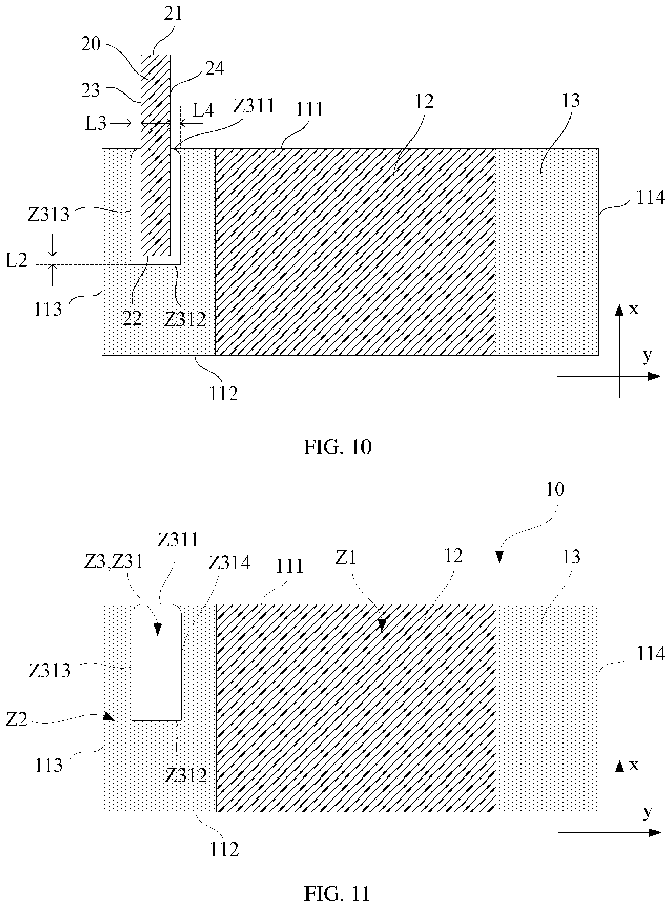

During formation of the first portion Z31 of the third region Z3, the first insulation layer 13 between the third side edge Z313 of the first portion and the first side edge 111 of the current collector may be punched off to leave an arc-shaped notch, in order to minimize the overlap of the tab 20 and the first insulation layer 13 in the third end portion of the current collector 11 while such overlap may increase the thickness of the electrochemical apparatus 1 and reduce the energy density of the electrochemical apparatus 1. Referring to FIG. 10 and FIG. 11, in this embodiment, the third side edge Z313 of the first portion and the fourth side edge Z314 of the first portion each independently include an arc-shaped portion. The arc-shaped portion is provided in the first end portion of the current collector 11. In other embodiments, an arc-like portion may be included. In the following description, the arc-shaped portion is used as an example.

In some embodiments, along the first direction x, an extending length of the arc-shaped portion is not greater than 10 mm. When the extending length of the arc-shaped portion is small, the area of the arc-shaped notch is small, so that the arc-shaped notch does not affect the stability of the connection between the tab 20 and the first portion Z31 of the third region Z3. The extending length may be understood as a straight-line distance between a starting point and an end point of the arc-shaped portion along the first direction x. The extending length of the arc-shaped portion can be obtained by measuring the straight-line distance between the starting point and the end point of the arc-shaped portion along the first direction x.

The starting point of the arc-shaped portion refers to a leftmost point of the arc-shaped portion along the first direction x, namely, a point of the arc-shaped portion closest to the third side edge 113 of the current collector.

The end point of the arc-shaped portion refers to a rightmost point of the arc-shaped portion along the first direction x, namely, a point of the arc-shaped portion furthest from the third side edge 113 of the current collector.

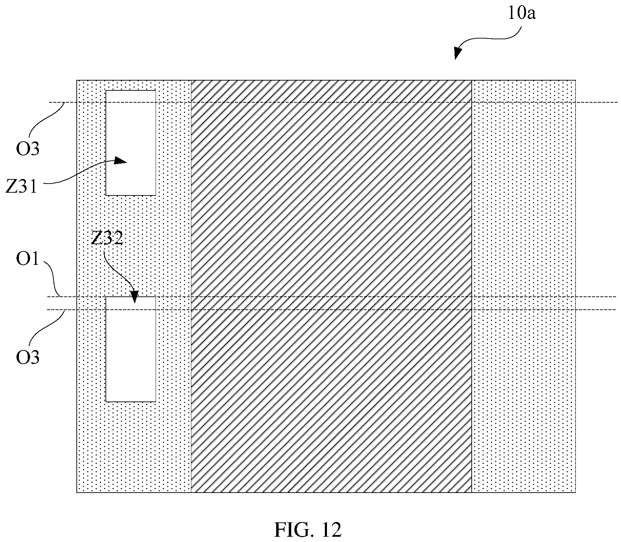

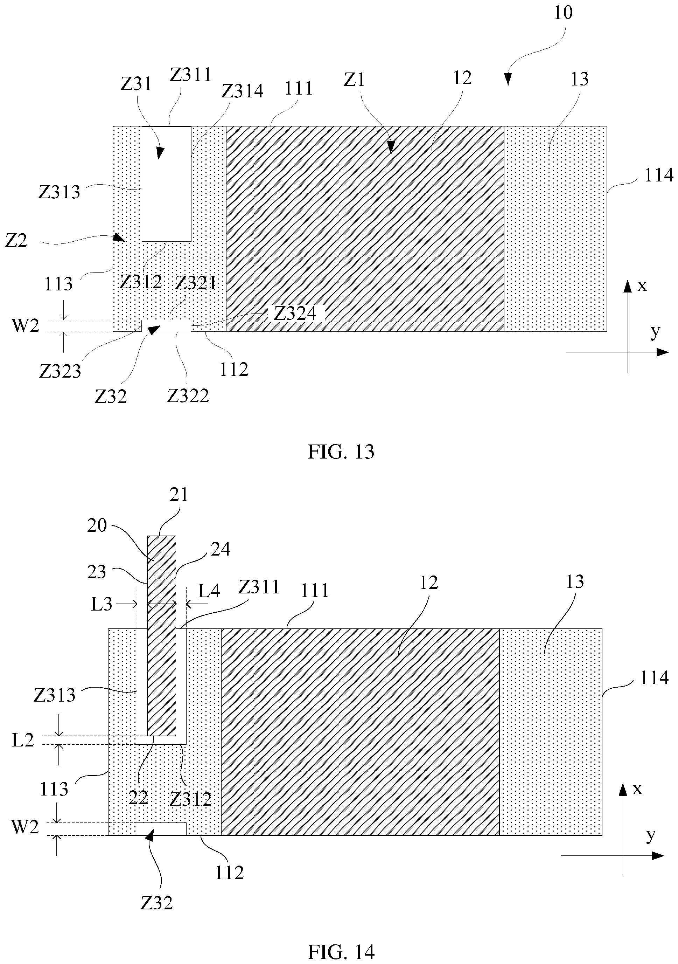

In some embodiments, a degree of difference between a length of the first side edge Z311 of the first portion and a length of the second side edge Z312 of the first portion is greater than 5%. For example, in the scenario illustrated in FIG. 12 and FIG. 13, an arc-shaped portion is provided at the upper end of the first portion Z31 of the third region Z3 to form an arc-shaped notch, and the length of the first side edge Z311 of the first portion is less than the length of the second side edge Z312 of the first portion. It should be understood that the length of the first side edge Z311 of the first portion is a distance between the end point of the arc-shaped portion of the third side edge Z313 of the first portion and the end point of the arc-shaped portion of the fourth side edge Z314 of the first portion, along the second direction y.

### Fourth embodiment

This embodiment is based on but different from the second embodiment. Referring to FIG. 12 to FIG. 14, in this embodiment, the third region Z3 further includes a second portion Z32, and the first portion Z31 of the third region Z3 and the second portion Z32 of the third region Z3 are arranged opposite each other along the first direction x. Along the thickness direction of the current collector 11, the orthographic projection of the second region Z2 and the orthographic projection of the second side edge 112 of the current collector jointly surround an orthographic projection of the second portion Z32 of the third region Z3.

The second portion Z32 of the third region Z3 includes a first side edge Z321 of the second portion, a second side edge Z322 of the second portion, a third side edge Z323 of the second portion, and a fourth side edge Z324 of the second portion. The first side edge Z321 of the second portion and the second side edge Z322 of the second portion are arranged opposite each other along the first direction x, where along the first direction x, the first side edge Z321 of the second portion is adjacent to the second side edge 112 of the current collector. The second portion and the second side edge Z322 of the second portion coincides with the second side edge 112 of the current collector. The third side edge Z323 of the second portion and the fourth side edge Z324 of the second portion are arranged opposite each other along the second direction y.

In some embodiments, the second portion Z32 of the third region Z3 satisfies at least one of the following four conditions.
(1) Along the first direction x, a distance W2 between the first side edge Z321 of the second portion and the second side edge 112 of the current collector satisfies 0<W2≤10 mm, and the second portion Z32 of the third region Z3 has a small length in the first direction x. This further reduces the exposed conductive region of the electrode plate 10.
(2) Along the second direction y, a degree of difference between a length of the first side edge Z321 of the second portion and a length of the second side edge Z312 of the first portion is not greater than 5%.
(3) The third side edge Z323 of the second portion and the third side edge Z313 of the first portion are on a straight line.
(4) The fourth side edge Z324 of the second portion and the fourth side edge Z314 of the first portion are on a straight line.

In contrast to FIG. 2 and FIG. 3, referring to FIG. 12 and FIG. 13, the electrode plate blank 10a is cut along dashed lines 03, and one electrode plate 10 of this embodiment is a portion between two adjacent dashed lines 03. In a scenario of cutting the entire electrode plate blank 10a into single electrode plates 10, an error is allowed in the cutting process, lowering the accuracy requirement for the cutting process. Based on the cutting process, two side edges mentioned in the foregoing conditions (3) and (4) being on a straight line includes the two side edges being on a straight line or approximately on a straight line. Being approximately on a straight line may be understood as that a maximum distance between these two side edges is smaller than a predetermined threshold along the second direction y. The predetermined threshold may be based on a production process error, for example, 2 mm.

In addition, for the first portion Z31 of the third region Z3 and the second portion Z32 of the third region Z3 in other shapes, the portion between two adjacent dashed lines 03 of the electrode plate blank 10a is in other shapes, and the two side edges mentioned in the foregoing conditions (3) and (4) may not be on a straight line at all. For example, before the electrode plate blank 10a is cut, the third side edge Z323 of the second portion and the third side edge Z313 of the first portion are on an arc. After the cutting, these two side edges form one side edge of a pattern located between two adjacent dashed lines 03. Therefore, along the second direction y, the degree of difference between the length of the first side edge Z321 of the second portion and the length of the second side edge Z312 of the first portion should be within a threshold, for example, not greater than 5%.

It should be understood that the structural design of the electrode plate 10 according to any one of the foregoing embodiments is for illustrative purposes only. In other embodiments, the third region Z3 may be in a shape different from those in the foregoing embodiments, provided that the orthographic projection of the second region Z2 along the thickness direction of the current collector 11 at least partially surrounds the orthographic projection of the first portion Z31 of the third region Z3 along the thickness direction of the current collector 11. Along the first direction x, the exposed conductive region of the electrode plate 10 has a length less than that of the electrode plate 10, so that the exposed conductive region of the electrode plate 10 is small. After the electrode plate 10 is connected to the tab 20, a region of the electrode plate 10 not covered by the tab 20 is small. This can reduce the safety risk such as a short circuit risk caused during a needle penetration operation on the electrochemical apparatus 1.

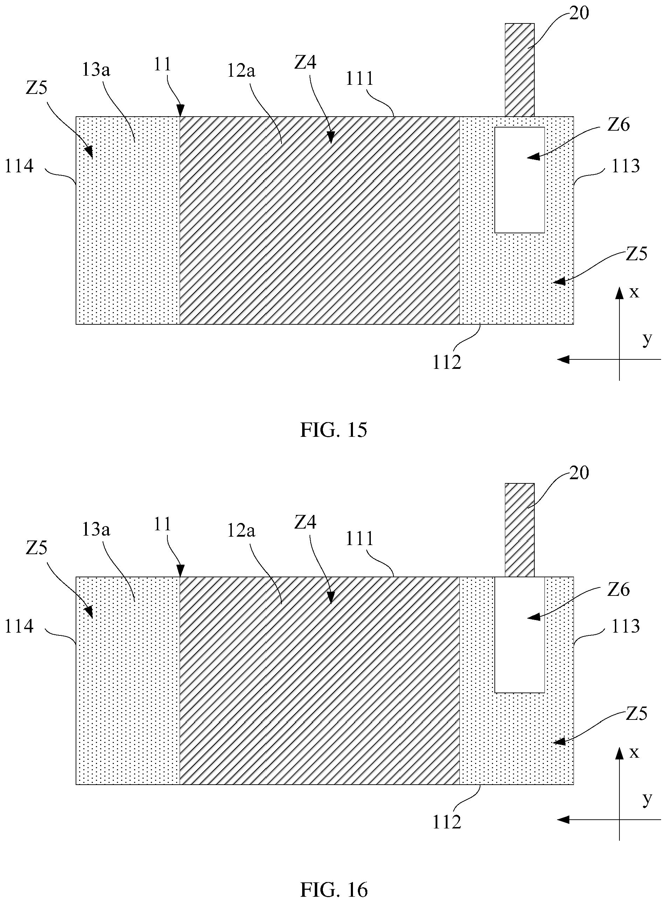

Based on any one of the foregoing embodiments, referring to FIG. 15 and FIG. 16, the electrode plate 10 further includes a second active material layer 12a and a second insulation layer 13a, and the second surface of the current collector 11 includes a fourth region Z4, a fifth region Z5, and a sixth region Z6. The fourth region Z4 is provided with the second active material layer 12a, the fifth region Z5 is provided with the second insulation layer 13a, and an orthographic projection of the fifth region Z5 along the thickness direction of the current collector 11 at least partially surrounds an orthographic projection of the sixth region Z6 along the thickness direction of the current collector 11.

The second active material layer 12a and the first active material layer 12 may or may not use the same material. The second insulation layer 13a and the first insulation layer 13 may or may not use the same material. The insulating material used for preparing the second insulation layer 13a and the first insulation layer 13, as well as the insulation performance may be determined based on actual needs. For example, in some scenarios, the insulating material for any insulation layer may include one of aluminum oxide or zirconium oxide, or a combination thereof. In some scenarios, an insulation resistance of any insulation layer may be greater than or equal to 0.1 Gohm. Optionally, the insulation resistance is greater than or equal to 1 Gohm, presenting good electrical insulation performance.

Along the thickness direction of the current collector 11, the sixth region Z6 and the third region Z3 at least partially overlap, helping improve the stability of welding between the tab 20 and the third region Z3.

In some embodiments, the sixth region Z6 and the third region Z3 satisfy one of the following three conditions:
(1) an orthographic projection of the sixth region Z6 along the thickness direction of the current collector 11 falls within an orthographic projection of the third region Z3 along the thickness direction of the current collector;
(2) an orthographic projection of the third region Z3 along the thickness direction of the current collector 11 falls within an orthographic projection of the sixth region Z6 along the thickness direction of the current collector 11; and
(3) an orthographic projection of the sixth region Z6 along the thickness direction of the current collector 11 coincides with an orthographic projection of the third region Z3 along the thickness direction of the current collector 11, for example, as shown in FIG. 15 and FIG. 16.

In some embodiments of this application, the third region Z3 further includes an exposed blank region of the current collector 11. A surface of the current collector 11 is exposed in this blank region. In other words, the current collector 11 is directly connected to the tab 20. This helps reduce an overlap between the tab 20 and the third end portion of the current collector 11 and reduce the thickness of the electrochemical apparatus 1, thereby increasing the energy density of the electrochemical apparatus 1.

In some embodiments of this application, the third region Z3 is provided with a plating layer (not shown in the figure), and the tab 20 is connected to the current collector 11 through the plating layer. The plating layer can facilitate a stable connection between the tab 20 and the current collector 11, achieving proper electrical contact between them. A specific type of the plating layer is not limited in this application. For example, a thermal conductivity of the plating layer is higher than a thermal conductivity of the current collector 11, so that the heat generated by the current collector 11 and the electrochemical apparatus 1 can be conducted to the tab 20 and then to the outside through the plating layer, facilitating the heat dissipation of the electrochemical apparatus 1. For another example, an electrical conductivity of the plating layer is higher than an electrical conductivity of the current collector 11, helping improve the electrical connection between the current collector 11 and the tab 20 and reducing the resistance of the electrical connection.

The electrode plate 10 according to any one of the foregoing embodiments may be a positive electrode plate or a negative electrode plate, or both the positive electrode plate and the negative electrode plate adopt the design of the electrode plate 10 according to any one of the foregoing embodiments.

### Positive electrode plate

The positive electrode plate may include a positive electrode current collector, a positive electrode active substance layer (for example, the first active material layer 12 and the second active material layer 12a) formed on two surfaces of the positive electrode current collector, and an insulation layer (for example, the first insulation layer 13 and the second insulation layer 13a). The positive electrode active substance layer contains a positive electrode active substance.

A material of the positive electrode current collector (for example, the current collector 11) is not particularly limited, and may be any material that can be used as the positive electrode current collector. In some embodiments, the positive electrode current collector includes but is not limited to a metal material such as aluminum (Al), stainless steel, nickel (Ni), titanium (Ti), and tantalum (Ta), and a carbon material such as carbon cloth and carbon paper.

In some implementations, the positive electrode active substance layer may be of one or multiple layers, and each of the multiple positive electrode active substance layers contains a same or different positive electrode active substances. The positive electrode active substance is a substance capable of reversibly intercalating and deintercalating metal ions such as lithium ions. Preferably, a charge capacity of the positive electrode active substance layer is lower than a discharge capacity of a negative electrode active substance layer to prevent lithium metal from precipitating on a negative electrode plate during charging.

A type of the positive electrode active substance is not limited in this embodiment of this application, provided that metal ions (for example, lithium ions) can be electrochemically absorbed and released. In some implementations, the positive electrode active substance may be a substance containing lithium and at least one transition metal. An example of the positive electrode active substance may include but is not limited to a lithium transition metal composite oxide and a lithium-containing transition metal phosphate compound. The transition metal includes but is not limited to vanadium (V), titanium (Ti), chromium (Cr), manganese (Mn), ferrum (Fe), cobalt (Co), nickel (Ni), cuprum (Cu), or the like.

A substance attached to a surface of the positive electrode active substance may have a different composition. The attached substance includes but is not limited to: an oxide such as aluminum oxide, silicon dioxide, titanium dioxide, zirconium oxide, magnesium oxide, calcium oxide, boron oxide, antimony oxide, and bismuth oxide; sulfate such as lithium sulfate, sodium sulfate, potassium sulfate, magnesium sulfate, calcium sulfate, and aluminum sulfate; carbonate such as lithium carbonate, calcium carbonate, and magnesium carbonate; carbon; or the like.

A method for attaching a substance to the surface of the positive electrode active substance layer includes but is not limited to: dissolving or suspending the attached substance in a solvent to infiltrate into the positive electrode active substance, and then performing drying; dissolving or suspending the attached substance in a solvent to infiltrate into the positive electrode active substance, and then performing heating or the like to make the attached substance react; adding the attached substance to a precursor of the positive electrode active substance while performing sintering; or the like. In an example of attaching carbon, a method of mechanical attachment may be used by using a carbon material (for example, activated carbon, or the like).

Attaching a substance to the surface of the positive electrode active substance layer can inhibit oxidation reaction of an electrolyte on the surface of the positive electrode active substance layer, helping prolong the service life of the electrochemical apparatus 1. In the description of this application, the positive electrode active substance layer and the substance attached to the surface thereof may also be referred to as a positive electrode active substance layer.

The positive electrode insulation layer includes but is not limited to at least one of aluminum oxide, alumina hydroxide, silicon oxide, boehmite, titanium oxide, zirconium oxide, or the like, or a combination thereof. Optionally, a binder with a mass percentage of 3%-15% is added and mixed.

### Negative electrode plate

The negative electrode plate may include a negative electrode current collector, a negative electrode active substance layer (for example, the first active material layer 12 and the second active material layer 12a) formed on two surfaces of the negative electrode current collector, and an insulation layer (for example, the first insulation layer 13 and the second insulation layer 13a). The negative electrode active substance layer contains a negative electrode active substance.

In some embodiments, the negative electrode current collector (for example, the current collector 11) includes but is not limited to metal foil, a metal film, a metal mesh, a stamped metal plate, a foamed metal plate, or a conductive resin plate.

In some implementations, the negative electrode active substance layer may be of one or more layers, and each of the multiple negative electrode active substance layers may contain a same or different negative electrode active substances. The negative electrode active substance is any substance capable of reversibly intercalating and deintercalating metal ions such as lithium ions.

A type of the negative electrode active substance is not limited in this embodiment of this application, provided that metal ions can be electrochemically absorbed and released. In some embodiments, the negative electrode active substance includes but is not limited to a lithium transition metal composite oxide, a lithium-containing transition metal phosphate compound, a carbon material such as graphite, hard carbon, and soft carbon, silicon (Si) and a silicon-containing compound such as a silicon oxide represented by SiOₓ (0 < x < 2), a lithium metal, metal that forms an alloy with lithium and an alloy thereof, an amorphous compound mainly composed of an oxide such as tin dioxide, or lithium titanate.

The negative electrode insulation layer includes but is not limited to at least one of aluminum oxide, alumina hydroxide, boehmite, silicon oxide, titanium oxide, or the like, or a combination thereof. Optionally, a binder with a mass percentage of 3%-15% is added and mixed.

### Isolation layer

An isolation layer is provided between the positive electrode plate and the negative electrode plate to isolate the positive electrode plate from the negative electrode plate, so as to prevent electrons in the electrochemical apparatus 1 from passing freely but allow ions in the electrolyte to pass freely. The positive electrode plate, the negative electrode plate, and the isolation layer are wound to form an electrode assembly of the electrochemical apparatus 1.

In the scenarios illustrated in the foregoing embodiments, the third region Z3 is provided on a head portion of the electrode plate 10. In the electrode assembly formed through winding, the tab 20 electrically connected to the third region Z3 is provided on the head portion of the electrode plate 10, namely, on the innermost ring of the electrode assembly.

In the electrode assembly formed through winding, the third region Z3 may alternatively be provided on a tail portion of the positive electrode plate, and the tab 20 electrically connected to the third region Z3 is provided on the tail portion of the positive electrode plate, namely, on the outermost ring of the electrode assembly. Alternatively, in other embodiments, the third region Z3 may be provided on the head or tail portion of the negative electrode plate, and the aforementioned beneficial effects can still be achieved.

Another embodiment of this application provides an electronic apparatus, including the electrochemical apparatus 1 according to any one of the foregoing embodiments.

The electronic apparatus may be implemented in various specific forms, for example, an electronic product such as an unmanned aerial vehicle, an electric vehicle, an electric cleaning tool, an energy storage product, an electromobile, an electric bicycle, or an electric navigation tool. In a practical scenario, the electronic apparatus includes but is not limited to a notebook computer, a pen-input computer, a mobile computer, an e-book player, a portable phone, a portable fax machine, a portable copier, a portable printer, a headset, a video recorder, a liquid crystal display television, a portable cleaner, a portable CD player, a mini disc, a transceiver, an electronic notebook, a calculator, a memory card, a portable recorder, a radio, a backup power supply, a motor, an automobile, a motorcycle, an assisted bicycle, a bicycle, a lighting fixture, a toy, a game console, a clock, an electric tool, a flashlight, a camera, a large household storage battery, a lithium-ion capacitor, or the like.

It can be understood by a person skilled in the art that the structure according to the embodiments of this application can also be applied to fixed electronic apparatuses in addition to elements specially used for mobile purposes.

Because the electronic apparatus contains the electrochemical apparatus 1 according to any one of the foregoing embodiments, the electronic apparatus can provide beneficial effects of the electrochemical apparatus 1 in the corresponding embodiment.

Without more restrictions, an element defined by the statement "including a ..." does not exclude existence of other same elements in a process, a method, an article, or an apparatus that includes the element. In addition, in different embodiments, components, features, or elements with a same name may have a same meaning or different meanings, and their specific meanings need to be determined based on their interpretations in the specific embodiment or further with reference to the context in the specific embodiment.

In addition, although the terms "first, second, third", and the like are used to describe various types of information in this specification, the information should not be limited to the terms. The terms are only used to distinguish between information of the same type. As used in this specification, singular forms "a", "an", and "the" are intended to also include plural forms. The terms "or" and "and/or" are interpreted as inclusive, or mean any one or any combination. An exception to this definition occurs only when a combination of elements, functions, steps, or operations is inherently mutually exclusive in some ways.

The following illustrates the technical solutions of this application by using specific examples.

### Example 1

With a structural design illustrated in FIG. 9, the positive electrode plate was wound to form an electrode assembly, where L2, L3, and L4 were all 2 mm, and the first insulation layer 13 was formed using aluminum oxide with a mass percentage of 90% and a binder with a mass percentage of 10%.

### Example 2:

With a structural design illustrated in FIG. 9, the positive electrode plate was wound to form an electrode assembly, where L2 was 1.5 mm and L3 and L4 were both 2 mm, and the first insulation layer 13 was formed using aluminum oxide with a mass percentage of 90% and a binder with a mass percentage of 10%.

### Example 3:

With a structural design illustrated in FIG. 9, the positive electrode plate was wound to form an electrode assembly, where L2 was 2 mm and L3 and L4 were both 1.5 mm, and the first insulation layer 13 was formed using aluminum oxide with a mass percentage of 90% and a binder with a mass percentage of 10%.

### Example 4:

With a structural design illustrated in FIG. 9, the positive electrode plate was wound to form an electrode assembly, where L2, L3, and L4 were all 2 mm, and the first insulation layer 13 was formed using aluminum oxide with a mass percentage of 85% and a binder with a mass percentage of 15%.

### Example 5:

With a structural design illustrated in FIG. 9, the positive electrode plate was wound to form an electrode assembly, where L2 was 1.5 mm and L3 and L4 were both 2 mm, and the first insulation layer 13 was formed using aluminum oxide with a mass percentage of 85% and a binder with a mass percentage of 15%.

### Example 6:

With a structural design illustrated in FIG. 9, the positive electrode plate was wound to form an electrode assembly, where L2 was 2 mm and L3 and L4 were both 1.5 mm, and the first insulation layer 13 was formed using aluminum oxide with a mass percentage of 85% and a binder with a mass percentage of 15%.

### Example 7:

With a structural design illustrated in FIG. 14, the positive electrode plate was wound to form an electrode assembly, where the first portion Z31 of the third region Z3 was in a rectangular shape, the first portion Z31 of the third region Z3 had a length of 2 mm and a width of 8 mm, and the first insulation layer 13 was formed using aluminum oxide with a mass percentage of 90% and a binder with a mass percentage of 10%.

### Example 8:

With a structural design illustrated in FIG. 14, the positive electrode plate was wound to form an electrode assembly, where the first portion Z31 of the third region Z3 was in a rectangular shape, the first portion Z31 of the third region Z3 had a length of 1.5 mm and a width of 8 mm, and the first insulation layer 13 was formed using aluminum oxide with a mass percentage of 90% and a binder with a mass percentage of 10%.

### Example 9:

With a structural design illustrated in FIG. 14, the positive electrode plate was wound to form an electrode assembly, where the first portion Z31 of the third region Z3 was in a rectangular shape, the first portion Z31 of the third region Z3 had a length of 3 mm and a width of 8 mm, and the first insulation layer 13 was formed using aluminum oxide with a mass percentage of 90% and a binder with a mass percentage of 10%.

### Example 10:

With a structural design illustrated in FIG. 14, the positive electrode plate was wound to form an electrode assembly, where the first portion Z31 of the third region Z3 was in a rectangular shape, the first portion Z31 of the third region Z3 had a length of 2 mm and a width of 10 mm, and the first insulation layer 13 was formed using aluminum oxide with a mass percentage of 90% and a binder with a mass percentage of 10%.

### Example 11:

With a structural design illustrated in FIG. 14, the positive electrode plate was wound to form an electrode assembly, where the first portion Z31 of the third region Z3 was in a rectangular shape, the first portion Z31 of the third region Z3 had a length of 2 mm and a width of 12 mm, and the first insulation layer 13 was formed using aluminum oxide with a mass percentage of 90% and a binder with a mass percentage of 10%.

### Example 12:

With a structural design illustrated in FIG. 14, the positive electrode plate was wound to form an electrode assembly, where the first portion Z31 of the third region Z3 was in a rectangular shape, the first portion Z31 of the third region Z3 had a length of 2 mm and a width of 14 mm, and the first insulation layer 13 was formed using aluminum oxide with a mass percentage of 90% and a binder with a mass percentage of 10%.

### Comparative example:

The positive electrode plate adopted the prior art and was wounded to form an electrode assembly. The active material of the positive electrode plate included lithium cobalt oxide, and the current collector was 9 mm-thick aluminum foil.

### Needle penetration test method

(1) A lithium-ion battery was charged to 4.2 V-4.4 V.
(2) The lithium-ion battery (namely, the electrochemical apparatus 1) was penetrated by a steel nail with a diameter of 2.5 mm.
(3) Temperature was measured throughout the process, and observation was made.

The criterion for passing the test is that the lithium-ion battery does not catch fire or explode.

The performance test results of Example 1 to Example 12 and the comparative example are shown in the table below. In the table below, the pass rate of the needle penetration test is a ratio of lithium-ion batteries that passed the needle penetration test, expressed as "m/n", where n is the number of lithium-ion batteries tested and m is the number of lithium-ion batteries that passed the needle penetration test without causing a short circuit.

| | Pass rate of needle penetration test |
|---|---|
| Example 1 | 10/10 |
| Example 2 | 10/10 |
| Example 3 | 10/10 |
| Example 4 | 10/10 |
| Example 5 | 10/10 |
| Example 6 | 10/10 |
| Example 7 | 10/10 |
| Example 8 | 10/10 |
| Example 9 | 10/10 |
| Example 10 | 10/10 |
| Example 11 | 10/10 |

| | |
|---|---|
| Example 12 | 10/10 |
| Comparative example | 4110 |

According to the results, compared to the conventional lithium-ion battery (in the comparative example), the electrochemical apparatus 1 in the embodiments of this application has the following characteristic: during needle penetration operations on the electrochemical apparatus 1, the risk of short circuit can be reduced, thereby reducing the safety risk.

The foregoing descriptions are merely some embodiments of this application, but are not intended to limit the patent scope of this application. Any equivalent structural transformations made by using the content of the specification and drawings are included in the patent protection scope of this application in the same way.

## Claims

1. An electrochemical apparatus comprising an electrode plate and a tab, wherein the electrode plate comprises:
a current collector, wherein the current collector comprises a first surface and a second surface arranged opposite each other;
a first active material layer; and
a first insulation layer, wherein
the first surface of the current collector comprises a first region, a second region, and a third region, wherein the third region comprises a first portion, the first region is provided with the first active material layer, and the second region is provided with the first insulation layer, wherein
an orthographic projection of the second region along a thickness direction of the current collector at least partially surrounds an orthographic projection of the first portion of the third region along the thickness direction of the current collector.

2. The electrochemical apparatus according to claim 1, wherein the tab is provided on the current collector, and the orthographic projection of the first portion of the third region along the thickness direction of the current collector partially surrounds an orthographic projection of the tab along the thickness direction of the current collector, wherein
the current collector comprises:
a first end portion and a second end portion arranged along a first direction, wherein the first direction is a width direction of the current collector, the first end portion comprises a first side edge of the current collector, and the second end portion comprises a second side edge of the current collector; and
a third end portion and a fourth end portion arranged along a second direction, wherein the second direction is a length direction of the current collector, the third end portion comprises a third side edge of the current collector, and the fourth end portion comprises a fourth side edge of the current collector, wherein
along the first direction, the first portion of the third region is provided in the first end portion, and
along the second direction, the first portion of the third region is provided in the third end portion;
the tab comprises:
a first side edge of the tab and a second side edge of the tab arranged opposite each other along the first direction, wherein along the first direction, a distance between the second side edge of the tab and the second side edge of the current collector is smaller than a distance between the first side edge of the tab and the second side edge of the current collector; and
a third side edge of the tab and a fourth side edge of the tab arranged opposite each other along the second direction, wherein along the second direction, a distance between the third side edge of the tab and the third side edge of the current collector is smaller than a distance between the fourth side edge of the tab and the third side edge of the current collector; and
the first portion of the third region comprises:
a first side edge of the first portion and a second side edge of the first portion arranged opposite each other along the first direction, wherein along the first direction, the second side edge of the first portion is adjacent to the second side edge of the tab; and
a third side edge of the first portion and a fourth side edge of the first portion arranged opposite each other along the second direction, wherein along the second direction,
the third side edge of the first portion is adjacent to the third side edge of the tab, and the fourth side edge of the first portion is adjacent to the fourth side edge of the tab.

3. The electrochemical apparatus according to claim 2, wherein along the first direction, a distance between the second side edge of the first portion and the second side edge of the tab is L2, a distance between the third side edge of the first portion and the third side edge of the tab is L3, and a distance between the fourth side edge of the first portion and the fourth side edge of the tab is L4, wherein at least one of the following conditions is satisfied:
(a1) L2 ≤ 10 mm;
(b1) L3 ≤ 10 mm; or
(c1) L4 ≤ 10 mm;
or

4. The electrochemical apparatus according to claim 2, wherein the orthographic projection of the second region along the thickness direction of the current collector surrounds an orthographic projection of the third region along the thickness direction of the current collector.

5. The electrochemical apparatus according to claim 4, wherein a distance W1 between the first side edge of the first portion and the first side edge of the current collector satisfies 0 < W1 ≤ 10 mm.

6. The electrochemical apparatus according to claim 4, wherein along the second direction, a degree of difference between a length of the first side edge of the first portion and a length of the second side edge of the first portion is not greater than 5%.

7. The electrochemical apparatus according to claim 2, wherein the orthographic projection of the second region along the thickness direction of the current collector and part of an orthographic projection of the first side edge of the current collector along the thickness direction of the current collector jointly surround the orthographic projection of the first portion of the third region along the thickness direction of the current collector.

8. The electrochemical apparatus according to claim 4, wherein a degree of difference between a length of the first side edge of the first portion and a length of the second side edge of the first portion is greater than 5%.

9. The electrochemical apparatus according to claim 8, wherein the length of the first side edge of the first portion is less than the length of the second side edge of the first portion.

10. The electrochemical apparatus according to claim 6, wherein the third side edge of the first portion and the fourth side edge of the first portion each independently comprise an arc-shaped portion or an arc-like portion, wherein the arc-shaped portion or arc-like portion is provided in the first end portion.

11. The electrochemical apparatus according to claim 10, wherein along the first direction, an extending length of the arc-shaped portion or arc-like portion is not greater than 10 mm.

12. The electrochemical apparatus according to claim 2, wherein the third region further comprises a second portion, wherein along the first direction, the second portion of the third region is provided in the second end portion.

13. The electrochemical apparatus according to claim 12, wherein the orthographic projection of the second region along the thickness direction of the current collector and an orthographic projection of the second side edge of the current collector along the thickness direction of the current collector jointly surround an orthographic projection of the second portion of the third region along the thickness direction of the current collector.

14. The electrochemical apparatus according to claim 13, wherein the second portion of the third region comprises:
a first side edge of the second portion and a second side edge of the second portion arranged opposite each other along the first direction, wherein along the first direction, the first side edge of the second portion is adjacent to the second side edge of the current collector, and the second side edge of the second portion coincides with the second side edge of the current collector; and
a third side edge of the second portion and a fourth side edge of the second portion arranged opposite each other along the second direction, wherein the second portion of the third region satisfies at least one of the following conditions:
(a2) along the first direction, a distance W2 between the first side edge of the second portion and the second side edge of the current collector satisfies 0 <W2≤10 mm;
(b2) along the second direction, a degree of difference between a length of the first side edge of the second portion and a length of the second side edge of the first portion is not greater than 5%;
(c2) the third side edge of the second portion and the third side edge of the first portion are on a straight line; or
(d2) the fourth side edge of the second portion and the fourth side edge of the first portion are on a straight line.

15. The electrochemical apparatus according to claim 1, wherein the electrode plate comprises a second active material layer and a second insulation layer, and the second surface of the current collector comprises a fourth region, a fifth region, and a sixth region, wherein the fourth region is provided with the second active material layer, the fifth region is provided with the second insulation layer, and an orthographic projection of the fifth region along the thickness direction of the current collector at least partially surrounds an orthographic projection of the sixth region along the thickness direction of the current collector.

16. The electrochemical apparatus according to claim 15, wherein the sixth region and the third region satisfy one of the following conditions:
(a3) the orthographic projection of the sixth region along the thickness direction of the current collector falls within an orthographic projection of the third region along the thickness direction of the current collector;
(b3) an orthographic projection of the third region along the thickness direction of the current collector falls within the orthographic projection of the sixth region along the thickness direction of the current collector; or
(c3) the orthographic projection of the sixth region along the thickness direction of the current collector coincides with an orthographic projection of the third region along the thickness direction of the current collector.

17. The electrochemical apparatus according to claim 1, wherein the third region comprises an exposed blank region of the current collector.

18. The electrochemical apparatus according to claim 1, wherein the third region is provided with a plating layer, and the tab is connected to the current collector through the plating layer.

19. The electrochemical apparatus according to claim 18, wherein a thermal conductivity of the plating layer is higher than a thermal conductivity of the current collector.

20. The electrochemical apparatus according to claim 1, wherein the first insulation layer comprises a first insulating material, and the first insulating material comprises at least one of combinations of aluminum oxide, alumina hydroxide, silicon oxide, boehmite, titanium oxide, and zirconium oxide.

21. The electrochemical apparatus according to claim 1, wherein the first active material layer comprises an active material, and the active material comprises at least one of combinations of a lithium transition metal composite oxide and a lithium-containing transition metal phosphate compound.

22. An electronic apparatus, comprising a load and the electrochemical apparatus according to any one of claims 1 to 21, wherein the electrochemical apparatus supplies power to the electronic apparatus.
